# EUROPEAN PATENT APPLICATION

(11) **EP 4 806 791 A1**
(43) Date of publication of application: **16.09.2026**
(21) Application number: 26163396.0
(22) Date of filing: 09.03.2026
(51) Int. Cl.: B64D 37/00, B64D 37/02, B64D 37/30, B64D 37/34, F02C 7/232, F02C 9/40, F02D 19/06, F02D 41/00

(54) **AIRCRAFT FUEL DELIVERY SYSTEM**

(30) Priority: 13.03.2025 GB 202503711
(71) Applicant: Airbus Operations Ltd, Filton, Bristol BS34 7PA (GB)
(72) Inventor: Henry, Edwards, Bristol, BS34 7PA (GB)
(74) Representative: Harvey, Alexander James

(57) **Abstract**

The present invention relates to an aircraft fuel delivery system having a first tank for storing a first fluid, second tank for storing a second fluid and a shut-off valve. The shut-off valve comprises a first inlet port for introducing the first fluid into an internal valve chamber and a second inlet port for introducing the second fluid into the internal valve chamber such that the second fluid can be combined with the first fluid to create a fluid mixture. The shut-off valve also comprises a valve member the position of which can be adjusted for controlling the delivery of the first fluid and/or the fluid mixture to the aircraft power plant.

## Description

### FIELD OF THE INVENTION

The present invention relates to an aircraft fuel delivery system, to an aircraft comprising said aircraft fuel delivery system, and to a method of delivering a fuel mixture to an aircraft engine or to an aircraft auxiliary power unit.

### BACKGROUND OF THE INVENTION

Aircraft fuel can be "dosed" with fuel additives prior to flight for several different reasons, such as enhancing fuel performance or improving the efficiency of the aircraft. The volume of fuel additive that is added to the fuel may also change depending on several factors, such as the flight route of the aircraft (to account for environmental changes and conditions) and the age of the aircraft (for maintenance purposes).

Fuel additives may be pre-mixed into the fuel from a refinery before being introduced into the aircraft. While this ensures a consistent and controlled fuel composition, it does not allow for customisation or adjustment of the additive volume during the aircraft's flight.

It is therefore an aim of the present invention to provide an improved aircraft fuel delivery system to address the aforementioned disadvantages.

### SUMMARY OF THE INVENTION

A first aspect of the invention provides an aircraft fuel delivery system comprising:
a first tank for storing a first fluid;
a second tank for storing a second fluid;
a first line in fluid communication with the first tank;
a second line in fluid communication with the second tank; and
a shut-off valve comprising:
   a valve housing having an internal valve chamber;
   a first inlet port in fluid communication with the first line for introducing the
      first fluid into the internal valve chamber;
   a second inlet port in fluid communication with the second line for introducing the second fluid into the internal valve chamber such that the second fluid can be combined with the first fluid to create a fluid mixture;
   an outlet port in fluid communication with a delivery line for conveying the first fluid or the fluid mixture from the internal valve chamber to an aircraft power plant; and
   a valve member for controlling the delivery of the first fluid and/or the fluid
      mixture to the outlet port.

Optionally, the valve member is further configured to control the amount of the first and/or second fluid being introduced into the internal valve chamber.

Optionally, the valve member is configured to move between a first position in which the flow of fluid from the first inlet port to the outlet port is permitted, and a second position in which the flow of fluid from the first inlet port to the outlet port is substantially restricted.

Optionally, the valve member is further moveable into a third position in which the flow of fluid from the first inlet port to the outlet port is partially restricted.

Optionally, the first line has a first diameter and wherein the second line has a second diameter which is different to the first diameter.

Optionally, the aircraft fuel delivery system further comprises a valve nozzle for introducing the second fluid from the second inlet port into the internal valve chamber.

Optionally, the valve nozzle is positioned proximate to a rotational axis of the valve member.

Optionally, the valve nozzle is positioned at an outer peripheral edge of the valve member.

Optionally, the valve nozzle is configured to introduce the second fluid into a low-pressure region created within the internal valve chamber downstream of the valve member.

Optionally, the valve nozzle is configured to introduce the second fluid into a high-velocity flow region created at a peripheral region of the internal valve chamber.

Optionally, the shut-off valve is configured such that, when the valve member is moved into the first position, the flow of fluid from the second inlet port to the outlet port is permitted, and is further configured such that, when the valve member is moved into the second position, the flow of fluid from the second inlet port to the outlet port is substantially restricted.

Optionally, the valve member is further moveable into a third position in which the flow of fluid from the first inlet port to the outlet port is permitted, and in which the flow of fluid from the second inlet port into the internal valve chamber is substantially restricted.

Optionally, the valve member is further moveable into a fourth position in which the flow of fluid from the first inlet port into the internal valve chamber is partially restricted, and in which the flow of fluid from the second inlet port into the internal valve chamber is also partially restricted.

Optionally, the valve member comprises a channel extending through the valve member, and the shut-off valve is configured such that the second fluid is combined with the first fluid within said channel.

Optionally, the aircraft fuel delivery system further comprises:
a third tank for storing a third fluid; and
a third line in fluid communication with the third tank, and
the shut-off valve further comprises a third inlet port in fluid communication with the third line for introducing the third fluid into the internal valve chamber.

Optionally, the third line has a third diameter which is different to the first and/or second diameters.

Optionally, the shut-off valve is configured such that, when the valve member is in the first position, the flow of fluid from the third inlet port into the internal valve chamber is substantially restricted.

Optionally, the shut-off valve is configured such that, when the valve member is in the second position, the flow of fluid from the third inlet port to the outlet port is substantially restricted.

Optionally, the valve member is further moveable into a third position in which the flow of fluid from the first inlet port to the outlet port is permitted, and in which the flow of fluid from the second and third inlet ports into the internal valve chamber is substantially restricted.

Optionally, the valve member is further moveable into a fourth position in which the flow of fluid from the first, second and third inlet ports into the internal valve chamber is permitted.

Optionally, the shut-off valve comprises a venturi element.

Optionally, the venturi element is incorporated into the valve member.

Optionally, the shut-off valve is a low-pressure shut-off valve.

Optionally, the first fluid may be an aircraft fuel.

Optionally, the second fluid may be an aircraft fuel or an additive.

Optionally, the third fluid may be an aircraft fuel or an additive.

Optionally, the aircraft power plant may be an aircraft engine or an aircraft auxiliary power unit.

A further aspect of the invention provides an aircraft comprising the aircraft fuel delivery system according to the previous aspect of the invention.

A further aspect of the invention provides a method of delivering a fluid mixture to an aircraft power plant, said method comprising the steps of:
providing a first tank containing a first fluid;
providing a second tank containing a second fluid;
providing a shut-off valve having an internal valve chamber;
introducing the first fluid and the second fluid into the internal valve chamber;
mixing the second fluid with the first fluid within the internal valve chamber to create a fluid mixture; and
delivering the fluid mixture from the internal valve chamber to the aircraft power plant.

Optionally, the shut-off valve comprises a valve member, and the method further comprises adjusting a position of the valve member so as to control the amount of the first and/or second fluid being introduced into the fluid mixture.

Optionally, the method further comprises:
providing a third tank containing a third fluid;
introducing the third fluid into the internal valve chamber;
mixing the third fluid with the first fluid and the second fluid within the internal valve chamber to create a fluid mixture; and
delivering the fluid mixture from the internal valve chamber to the aircraft power plant.

Optionally, the shut-off valve comprises a valve member, and the method further comprises adjusting a position of the valve member so as to control the amount of the third fluid being introduced into the fluid mixture.

Optionally, the shut-off valve comprises a valve member positioned inside the valve chamber, and the method further comprises:
positioning the valve member so as to create a low-pressure region within the internal valve chamber downstream of the valve member; and
introducing the second and/or third fluid into the low-pressure region created within the internal valve chamber.

Optionally, the shut-off valve comprises a valve member positioned inside the valve chamber, and the method further comprises:
positioning the valve member so as to create a high-velocity flow region at a peripheral region of the internal valve chamber; and
introducing the second and/or third fluid into the high-velocity flow region created within the internal valve chamber.

Optionally, the first fluid may be an aircraft fuel.

Optionally, the second fluid may be an aircraft fuel or an additive.

Optionally, the third fluid may be an aircraft fuel or an additive.

Optionally, the aircraft power plant may be an aircraft engine or an aircraft auxiliary power unit.

A further aspect of the invention provides a fuel delivery system for an aircraft comprising:
a fuel tank for storing aircraft fuel;
an auxiliary tank for storing an additive or another aircraft fuel;
a fuel line in fluid communication with the fuel tank;
an auxiliary line in fluid communication with the auxiliary tank;
a mixer for combining the aircraft fuel from fuel tank with the additive or aircraft fuel from the auxiliary tank to create a fuel mixture; and
a delivery line for delivering the aircraft fuel or the fuel mixture to an aircraft engine or to an aircraft auxiliary power unit;
wherein the fuel delivery system further comprises a shut-off valve for controlling the delivery of the aircraft fuel or the fuel mixture to the aircraft engine or to the aircraft auxiliary power unit;
wherein the shut-off valve comprises a valve chamber; and
wherein said valve chamber constitutes the mixer of the fuel delivery system.

### BRIEF DESCRIPTION OF THE DRAWINGS

Embodiments of the invention will now be described with reference to the accompanying drawings, in which:
Figure 1 is a schematic front view of an aircraft according to an embodiment of the present invention;
Figure 2 is a schematic plan view of an aircraft fuel delivery system according to an embodiment of the present invention;
Figure 3 is a perspective view of a shut-off valve of the aircraft fuel delivery system illustrated in Figure 2;
Figure 4A is a side view of the shut-off valve illustrated in Figure 3 in which the valve member is placed in a first operating position;
Figure 4B is a side view of the shut-off valve illustrated in Figure 3 in which the valve member is placed in a second operating position;
Figure 4C is a side view of the shut-off valve illustrated in Figure 3 in which the valve member is placed in a third operating position;
Figure 4D is a side view of the shut-off valve illustrated in Figure 3 in which the valve member is placed in a fourth operating position;
Figure 5 is a side view of a shut-off valve according to another embodiment of the present invention;
Figure 6A is a side view of a shut-off valve according to yet another embodiment of the present invention in which the valve member is placed in a first operating position;
Figure 6B is a further side view of the shut-off valve illustrated in Figure 6A in which the second inlet port for introducing the first additive or the second aircraft fuel into the internal valve chamber is visible;
Figure 6C is a side view of the shut-off valve illustrated in Figure 6A in which the valve member is placed in a third operating position;
Figure 6D is a side view of a shut-off valve according to a further embodiment of the present invention having a valve nozzle positioned proximate to a rotational axis of the valve member;
Figure 6E is a side view of a shut-off valve according to a still further embodiment of the present invention in which the valve nozzle is positioned at an outer peripheral edge of the valve member;
Figure 7A is a schematic plan view of an aircraft fuel delivery system according to another embodiment of the present invention;
Figure 7B is a side view of a shut-off valve of the aircraft fuel delivery system illustrated in Figure 7A in which the valve member is placed in a first operating position;
Figure 7C is a side view of the shut-off valve illustrated in Figure 7B in which the valve member is placed in a second operating position;
Figure 7D is a side view of the shut-off valve illustrated in Figure 7B in which the valve member is placed in a third operating position;
Figure 7E is a side view of the shut-off valve illustrated in Figure 7B in which the valve member is placed in a fourth operating position;
Figure 8A is a schematic plan view of an aircraft fuel delivery system according to a further embodiment of the present invention; and
Figure 8B is a schematic plan view of an aircraft fuel delivery system according to yet another embodiment of the present invention.

### DETAILED DESCRIPTION OF EMBODIMENT(S)

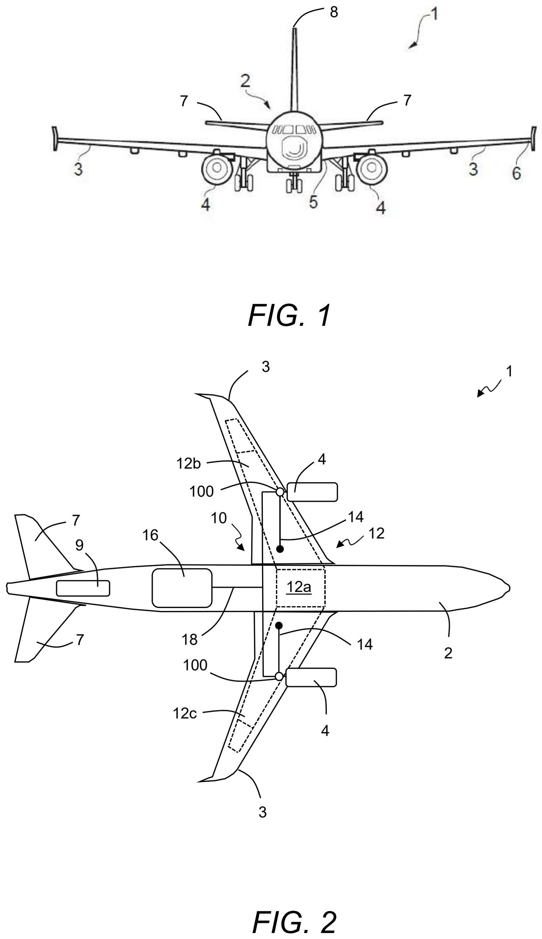

Figure 1 shows an aircraft 1 according to an embodiment of the present invention.

In the embodiment illustrated in Figure 1, the aircraft 1 is a typical jet passenger transport aircraft but the invention is applicable to a wide variety of fixed wing aircraft types, including commercial, military, passenger, cargo, jet, propeller, general aviation, etc.

The aircraft 1 has a fuselage 2 and two wings 3 extending from either side of the fuselage 2. Each wing 3 extends in a spanwise direction from a wing root 5 where the wing 3 meets the fuselage 2 to a wing tip 6. The aircraft 1 also comprises an empennage (or tail assembly) which includes starboard and port horizontal stabilisers 7 and a vertical stabiliser 8.

Engines 4 are located on the underside of each wing 3. Figure 1 shows a single engine 4 on each wing, however the number and location of the engines may vary depending on the type of aircraft.

In the embodiment illustrated in Figure 1, each wing 3 is a dihedral wing, so the wings 3 are angled upwardly as they extends towards the wing tip 6. However, it shall be appreciated that the present invention may also be used in aircraft having anhedral wings or any other suitable wing design.

The aircraft 1 also includes an auxiliary power unit 9 (often referred to as an "APU") which is mounted in the fuselage 2 proximate to the tail assembly (or empennage).

Figure 2 shows a fuel delivery system 10 of the aircraft 1 illustrated in Figure 1.

The fuel delivery system 10 includes a first tank 12, a first line 14 in fluid communication with the first tank 12 and a pair of shut-off valves 100 located between the first line 14 and the engine(s) 4.

The first tank 12 is configured for containing and storing a first aircraft fuel, such as a synthetic fuel, a sustainable aviation fuel (SAF), a kerosene-based fuel, such as Jet A1, or a combination thereof.

In the embodiment illustrated in Figure 2, the first tank 12 is made up of a plurality of sub-tanks 12a, 12b, 12c. The sub-tanks shown in Figure 2 comprise a centre tank 12a provided in the fuselage 2; a first wing tank 12b provided in the port wing 3; and a second wing tank 12c provided in the starboard wing. However, it shall be appreciated that in other embodiments, the first tank 12 may be provided as a single tank within the wing 3 or fuselage 2 structure.

The first aircraft fuel is loaded into the first tank 12 before the aircraft 1 takes off. The fuel delivery system 10 subsequently delivers the first aircraft fuel from the first tank 12 to one or more of the engines 4 via the first line 14 and the shut-off valve 100 when the aircraft 1 is in use.

It shall be appreciated that the first line 14 may be any suitable conduit that is configured to transport the first aircraft fuel contained in the first tank 12.

In the embodiment illustrated in Figure 2, the shut-off valves 100 are low-pressure shut-off valves (often referred to as "LPSOVs") which are located at the leading edges of the port and starboard wings 3.

However, it shall be appreciated that in other embodiments, the shut-off valves 100 may be of a different type. For example, in alternative embodiments, the shut-off valves may be high-pressure shut-off valves (often referred to as "HPSOVs") located downstream of the low-pressure shut-off valves 100 and upstream of the aircraft engine(s) 4.

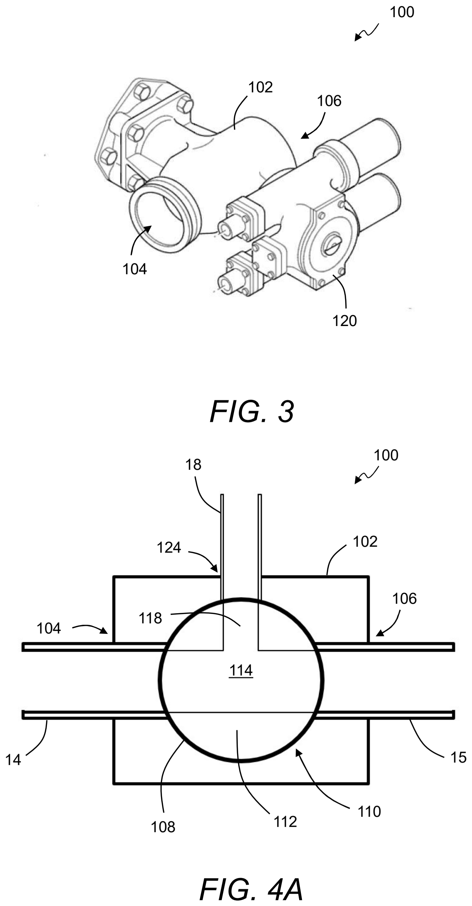

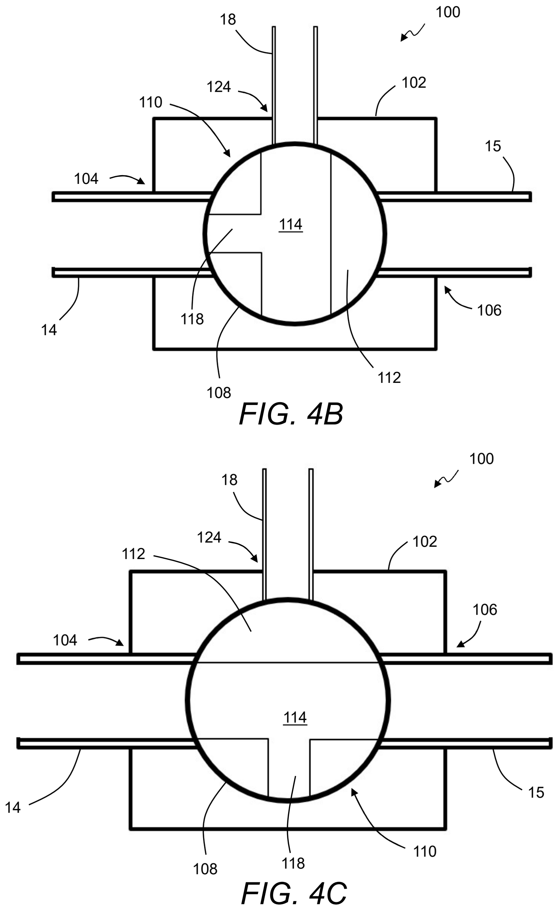

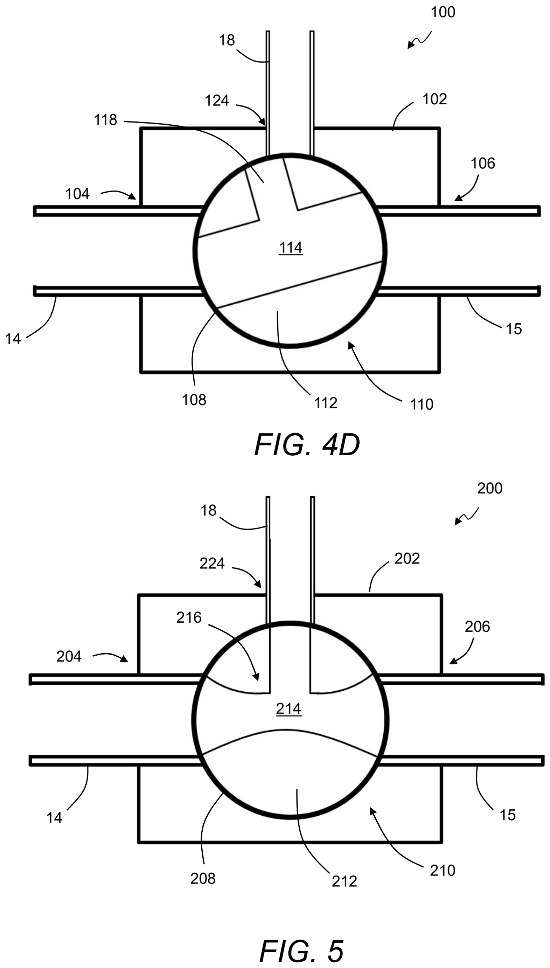

Figures 3 and 4 provide a more detailed depiction of one of the shut-off valves 100 of the fuel delivery system 10 illustrated in Figure 2.

In the embodiment illustrated in Figures 3 and 4, the shut-off valve 100 is a ball valve. However, it shall be appreciated that in other embodiments, the shut-off valve 100 may be another kind of a rotary valve. It shall also be appreciated that in further embodiments, the shut-off valve may be another suitable valve type, such as a linear motion valve or a pivoting valve.

As shown in Figures 3 and 4, the shut-off valve 100 comprises a valve housing 102 having a first inlet port 104, an outlet port 106 and an internal valve chamber 108 which together form a fluid flow path across the valve housing 102.

The first inlet port 104 is in fluid communication with the first line 14 of the fuel delivery system 10 such that the first aircraft fuel from the first tank 12 can be delivered through the first line 14 and into the internal valve chamber 108.

The outlet port 106 is in fluid communication with a delivery line 15 such that the first aircraft fuel can be conveyed from the internal valve chamber 108 to one or more of the aircraft engines 4 when the shut-off valve 100 is in a first, open, position.

A valve member 110 is housed within the internal valve chamber 108 of the valve housing 102, the valve member 110 being positioned in the fluid flow path.

In the illustrated embodiment, the shut-off valve 100 is a rotary ball valve and hence the valve member 110 has a substantially spherical body portion 112 having a first channel 114 extending therethrough.

The first channel 114 of the valve member 110 is configured to align with the first inlet port 104 and the outlet port 106 of the valve housing 102 when the valve member 110 is in the first, open, position to enable the first aircraft fuel to travel along the fluid flow path.

As such, when the valve member 110 is in the first, open, position, the first aircraft fuel is able to freely pass from the first inlet port 104 to the outlet port 106 where it can be subsequently delivered to the engine(s) 4 via the delivery line 15.

In the embodiment illustrated in Figures 3 and 4, the internal valve chamber 108 has a shape corresponding to that of the valve member 110, with the diameter of the internal valve chamber 108 being slightly larger than that of the valve member 110 so as to allow the valve member 110 to freely rotate within the internal valve chamber 108.

The valve member 110 is attached to a valve member drive shaft (not shown) which extends from the valve member 110 and passes through the valve housing 102.

As shown in Figure 3, fuel delivery system 10 also comprises a valve actuator 120 which is configured to apply an actuating force to the valve member drive shaft (not shown) which in turn transfers the actuating force onto the valve member 110 thereby causing the valve member 110 to rotate.

The valve actuator 120 is operable to move the valve member 110 between the first, open, position in which fluid is able to freely flow along the fluid flow path and a second, closed, position in which the fluid flow path is blocked by the valve member body 112 such that fluid is not able to flow along the fluid flow path.

Referring now to Figure 4B, when the valve member 110 is rotated by 90 degrees in the anti-clockwise direction into the second, closed, position, the first channel 114 is no longer aligned with the first inlet port 104 or the outlet port 106 and hence the first aircraft fuel is not able to pass from the first inlet port 104 to the outlet port 106.

As such, by actuating the valve member 110 from the first, open, position to the second, closed, position, the delivery of the first aircraft fuel from the first tank 12 to aircraft engine(s) 4 can be controlled by the aircraft operator.

For example, during normal operation of the aircraft 1, the valve member 110 may be placed in the first, open, position to enable the first aircraft fuel from the first tank 12 to be delivered to one or more of the aircraft engines 4.

However, in the event of an emergency engine shutdown or during a scheduled maintenance activity, the valve member 110 may be placed in the second, closed, position to substantially restrict (or "shut-off) the flow of the first aircraft fuel from the first tank 12 to the aircraft engine(s) 4.

Referring back to Figure 2, the fuel delivery system 10 also comprises a second tank 16 and a second line 18 in fluid communication with the second tank 16.

The second tank 16 is configured for containing and storing a second aircraft fuel, which is different to the first aircraft fuel, or a first additive.

In some embodiments, the second aircraft fuel may be a liquid that has a different chemical structure to that of the first aircraft fuel stored in the first tank 12. For example, the second aircraft fuel may be a sustainable aviation fuel (SAF) that has a lower-carbon count than Jet A1 or may be a blend of suitable biofuels.

Alternatively, the first additive may be a biocide, a metal deactivator, a lubricity enhancer, a detergent, a solvent, an emission control additive, an anti-static additive, or any other suitable fuel additive composition.

It shall be appreciated that the first additive may be provided as a liquid, a suspended powder in liquid, a solvent, a surfactant, a gaseous mixture, a dissolved mixture in an aviation fuel or any combination of the above.

In the embodiment illustrated in Figure 2, the second tank 16 is provided as a single tank within the fuselage 2 structure of the aircraft 1. However, it shall be appreciated that in other embodiments, the second tank 16 may be made up of a plurality of sub-tanks and/or may be provided at other locations about the aircraft 1.

The second aircraft fuel (or the first additive) is loaded into the second tank 16 before the aircraft 1 takes off. The aircraft fuel delivery system 10 subsequently delivers the second aircraft fuel (or the first additive) into the internal valve chamber 108 of the shut-off valve 100 via the second line 18 so as to "dose" the first aircraft fuel with the second aircraft fuel (or the first additive) to create a fuel mixture which is subsequently delivered to the engine(s) 4 via the delivery line 15.

It shall be appreciated that the second line 18 may be any suitable conduit that is configured to transport the second aircraft fuel (or the first additive) contained in the second tank 16.

It shall also be appreciated that storing the first aircraft fuel and the second aircraft fuels (or the first additive) in separate tanks reduces the risk of the contents "going off" or settling in the main fuel tank, thereby achieving improved storage stability.

As shown in Figure 4A, the valve housing 102 further comprises a second inlet port 124 which is in fluid communication with the second line 18 of the fuel delivery system 10 such that the second aircraft fuel (or the first additive) from the second tank 16 can be delivered through the second line 18 and into the internal valve chamber 108.

The body portion 112 of the valve member 110 also comprises a second channel 118 extending between the first channel 114 and an outer surface of the body portion 112.

The second channel 118 of the valve member 110 is orientated substantially perpendicular to the first channel 114 and is configured to align with the second inlet port 124 when the valve member 110 is in the first, open, position to enable the second aircraft fuel (or the first additive) to travel along the second channel 118 and into the first channel 114 where it can be combined with the first aircraft fuel to create the fuel mixture.

As such, when the valve member 110 is in the first, open, position, the second aircraft fuel (or the first additive) is able to freely pass from the second inlet port 124 to the outlet port 106 where it can be subsequently delivered to the engine(s) 4 via the delivery line 15 (along with the first aircraft fuel).

Referring now to Figure 4B, when the valve member 110 is rotated by 90 degrees in the anti-clockwise direction into the second, closed position, the second channel 118 is no longer aligned with the second inlet port 124 and hence the second aircraft fuel (or the first additive) is not able to pass from the second inlet port 124 to the outlet port 106 when the valve member 110 is rotated into the second, closed, position.

As such, when the valve member 110 is rotated into the second, closed, position, the flow of the second aircraft fuel (or the first additive) from the second inlet port 124 to the outlet port 106 is also substantially restricted.

Referring now to Figure 4C, in the illustrated embodiment, the valve actuator 120 is also operable to move the valve member 110 into a third position in which the first aircraft fuel is able to freely flow along the fluid flow path and in which the second aircraft fuel (or the first additive) is not able to pass from the second inlet port 124 into the internal valve chamber 108.

As shown in Figure 4C, when the valve member 110 is rotated by 180 degrees from the first, open, position into the third position, the first channel 114 of the valve member 110 remains aligned with the first inlet port 104 and the outlet port 106 of the valve housing 110 which enables the first aircraft fuel to travel along the fluid flow path.

As such, when the valve member 110 is in the third position, the first aircraft fuel is still able to freely pass from the first inlet port 104 to the outlet port 106 where it can be subsequently delivered to the engine(s) 4 via the delivery line 15.

However, when the valve member 110 is in the third position, the second channel 118 is no longer aligned with the second inlet port 124 and hence the passage of the second aircraft fuel (or the first additive) into the internal valve chamber 108 is blocked by the valve member body 112. As such, when the valve member 110 is in the third position, the second aircraft fuel (or the first additive) is not able to flow into the first channel 114 and hence only the first aircraft fuel is delivered to the engine(s) 4.

It shall be appreciated that by actuating the valve member 110 between the first, open, position and the third position, the chemistry of the fuel being delivered to the aircraft engine(s) 4 can be tailored on-board the aircraft 1 as may be desired by the aircraft operator depending on various factors sdeco

Furthermore, since the aforementioned fuel "dosing" is performed within the shut-off valve 100, the previously mentioned benefits can also be achieved without having to incorporate additional fuel-blending equipment into the fuel delivery system 10 of the aircraft 1. As such, the weight and/or cost of the aircraft 1 remains unaffected.

Referring now to Figure 4D, in the illustrated embodiment, the valve actuator 120 is also operable to move the valve member 110 into a fourth position in which the flow of the first aircraft fuel from the first inlet port 104 into the internal valve chamber 108, and the flow of the second aircraft fuel (or first additive) from the second inlet port 124 into the internal valve chamber 108, is partially restricted.

As shown in Figure 4D, when the valve member 110 is rotated by an angular distance of between 1 and 89 degrees (for example by approximately 45 degrees) in the anti-clockwise direction from the first, open, position to the fourth position, the first channel 114 of the valve member 110 will no longer be fully aligned with the first inlet port 104 and the outlet port 106 of the valve housing 102 and hence the flow of the first aircraft fuel from the first inlet port 104 to the outlet port will be partially restricted by the valve member body 112.

As such, whilst the first aircraft fuel is still able to flow from the first inlet port 104 to the outlet port 106, the volume of the first aircraft fuel flowing along the fluid flow path will be reduced when compared to the volume of the first aircraft fuel flowing along the fluid flow path when the valve member 110 is in the first, fully open, position.

Similarly, when the valve member 110 is rotated into the fourth position, the second channel 118 of the valve member 110 will also no longer be fully aligned with the second inlet port 124 and hence the flow of the second aircraft fuel (or the first additive) from the second inlet port 124 into the second channel 118 is also partially restricted by the valve member body 112.

As such, whilst the second aircraft fuel (or the first additive) is still able to flow from the second inlet port 124 into the internal valve chamber 108, the volume of the second aircraft fuel (or the first additive) flowing from the second inlet port 124 into the internal valve chamber 108 will also be reduced when compared to the volume of the second aircraft fuel (or the first additive) flowing from the second inlet port 124 to the internal valve chamber 108 when the valve member 110 is in the first, fully open, position.

As set out above, it shall be appreciated that by adjusting the position of the valve member 110, the fuel delivery system 10 of the present invention enables the aircraft operator to further control the amount of the first aircraft fuel and the amount of the second aircraft fuel (or first additive) being delivered into the internal valve chamber 108, and hence enables the chemistry of the fuel mixture being delivered to the aircraft engine(s) 4 to be further tailored as may be desired by the aircraft operator during the aircraft's flight.

For example, by rotating the valve member 110 into the fourth position, the aircraft operator is able to combine the first aircraft fuel and the second aircraft fuel (or first additive) to achieve a custom fuel mixture ratio as may be desired by the aircraft operator depending on various factors such as the flight route of the aircraft (to account for environmental changes and conditions) and/or the age of the aircraft (for maintenance purposes).

Referring now to Figure 5, a shut-off valve 200 according to an alternative embodiment of the present invention shall now be described.

It shall be appreciated that the shut-off valve 200 depicted in Figure 5 has many features in common with the shut-off valve 100 depicted in Figures 3 and 4 and so, for the sake of conciseness, only the differences shall be described herein. Like components have been denoted by corresponding reference numerals with the prefix "2".

Notably, in the embodiment illustrated in Figure 5, the shut-off valve 200 comprises a venturi element 216 which is incorporated into the first channel 214 of the valve member 210 at the intersection between the first 214 and second 218 channels.

It shall be appreciated that the narrowing section of the venturi element 216 provides the shut-off valve 200 with a passive flow control feature which helps to encourage mixing of the first aircraft fuel with the second aircraft fuel (or the first additive) and also helps to reduce pressure losses as fluid travels along the fluid flow path.

Furthermore, as the provision of such a venturi element 216 provides the shut-off valve 200 with a stronger suction effect, the venturi element 216 also helps to draw the second aircraft fuel (or the first additive) from the second channel 118 into the fluid flow path.

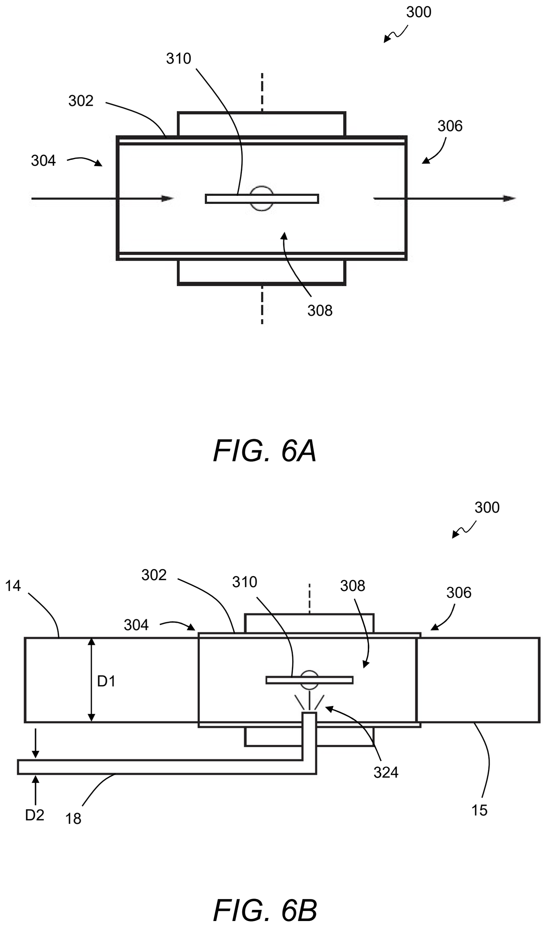

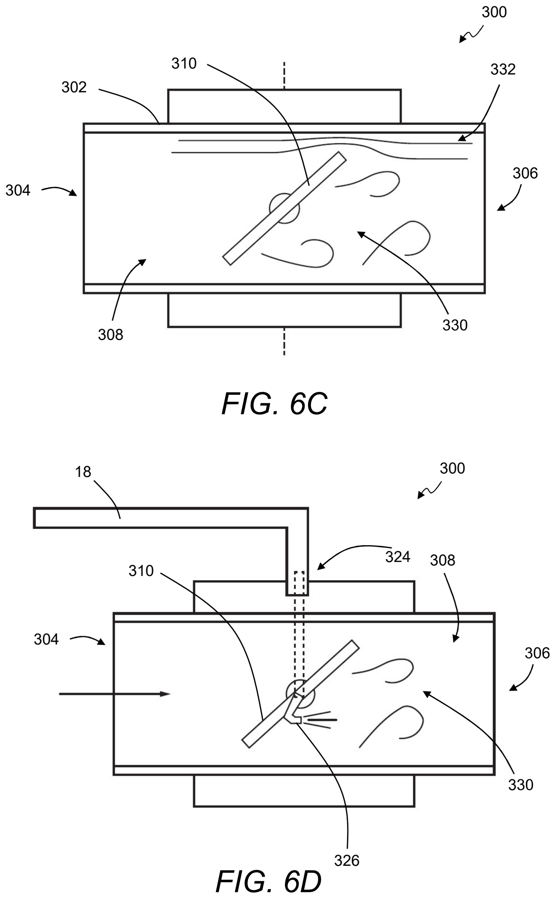

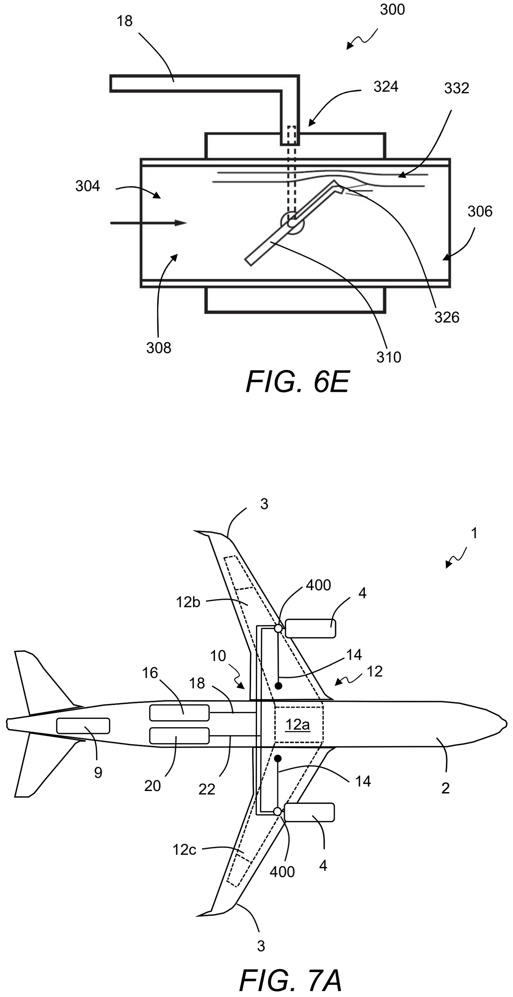

Referring now to Figure 6, a shut-off valve 300 according to yet another embodiment of the present invention shall now be described in further detail.

It shall be appreciated that in the embodiment illustrated in Figure 6, the shut-off valve 300 is a butterfly valve.

As shown in Figure 6A, the shut-off valve 300 comprises a valve housing 302 having a first inlet port 304, an outlet port 306 and an internal valve chamber 308 which together form a fluid flow path across the valve housing 302.

The first inlet port 304 is in fluid communication with the first line 14 of the fuel delivery system 10 such that the first aircraft fuel from the first tank 12 can be delivered through the first line 14 and into the internal valve chamber 308.

The outlet port 106 is in fluid communication with the delivery line 15 such that the first aircraft fuel can be delivered from the internal valve chamber 308 to one or more of the aircraft engines 4 when the shut-off valve 300 is in a first, open, position.

A valve member 310 is housed within the internal valve chamber 308 of the valve housing 302. The valve member 310 is attached to a valve member drive shaft (not shown) which extends from the valve member 310 and passes through the valve housing 302.

A valve actuator (not shown) is configured to apply an actuating force to the valve member drive shaft (not shown) which in turn transfers the actuating force onto the valve member 310 thereby causing the valve member 310 to rotate.

The valve actuator (not shown) is operable to move the valve member 310 between the first, open, position in which fluid is able to freely flow along the fluid flow path and a second, closed, position in which the fluid flow path is blocked by the valve member 310 such that fluid is not able to flow along the fluid flow path.

As shown in Figure 6A, when the valve member 310 is in the first, open, position, the valve member 310 is orientated substantially parallel to the fluid flow path. As such, when the valve member 310 is in the first, open, position, the first aircraft fuel is able to freely pass from the first inlet port 304 to the outlet port 306 where it can be subsequently delivered to the engine(s) 4 via the delivery line 15.

However, when the valve member 310 is rotated by 90 degrees into the second, closed, position, the valve member 310 becomes orientated substantially perpendicular to the fluid flow path which causes the valve member 310 to substantially restrict (or "block") the flow of the first aircraft fuel from first inlet port 304 to the outlet port 306.

As such, by actuating the valve member 310 between the first, open, position and the second, closed position, the delivery of the first aircraft fuel from the first tank 12 to aircraft engine(s) 4 can be controlled.

For example, during normal operation of the aircraft 1, the valve member 310 may be placed in the first, open, position to enable the first aircraft fuel from the first tank 12 to be delivered to one or more of the aircraft engines 4.

However, in the event of an emergency engine shutdown or during a scheduled maintenance activity, the valve member 310 may be placed in the second, closed, position to substantially restrict (or "shut-off) the flow of the first aircraft fuel from the first tank 12 to the aircraft engine(s) 4.

Referring now to Figure 6B, the valve housing 302 further comprises a second inlet port 324 which is in fluid communication with the second line 18 of the fuel delivery system 10 for delivering the second aircraft fuel (or the first additive) into the internal valve chamber 308 where it can be combined with the first aircraft fuel to create a fuel mixture.

In the illustrated embodiment, the second inlet port 324 is spaced apart from the first inlet port 306 by an angular distance of approximately 90 degrees such that the second inlet port 324 is positioned perpendicular to the fluid flow path to help encourage mixing of the first aircraft fuel with the second aircraft fuel (or the first additive) upon introduction of the second aircraft fuel (or the first additive) into the internal valve chamber 308. However, it shall be appreciated that in other embodiments, the second inlet port 324 may be provided at other locations about the valve housing 302.

In the embodiment illustrated in Figure 6, the first line 14 has a first diameter D1 and the second line 18 has a second diameter D2 which is different to the first diameter.

It shall be appreciated that the respective diameters of the first 14 and second 18 lines may be tailored to achieve a desired fuel-to-additive or fuel-to-fuel ratio.

Notably, as shown in Figure 6B, the diameter D2 of the second line 18 is significantly smaller than the corresponding diameter D1 of the first line 14 meaning that the fuel mixture created within the internal valve chamber 308 will contain a greater proportion of the first aircraft fuel when compared to the second aircraft fuel (or first additive).

However, it shall be appreciated that in other embodiments, the first 14 and second lines 18 may have other diameters. For example, in some embodiments, the diameter D2 of the second line 18 may be approximately equal to the corresponding diameter D1 of the first line 14 in embodiments where it is desirable for the fuel mixture created within the internal valve chamber 308 to have a 1:1 ratio.

In other alternatives, the diameter D2 of the second line 18 may be greater than the corresponding diameter D1 of the first line 14 in embodiments where it is desirable for the fuel mixture created within the internal valve chamber 308 to contain a greater proportion of the second aircraft fuel (or first additive) when compared to the first aircraft fuel.

Referring now to Figure 6C, in the illustrated embodiment, the valve actuator (not shown) is also operable to move the valve member 310 into a third position in which the flow of fluid along the fluid flow path is partially restricted.

As shown in Figure 6C, when the valve member 310 is rotated by an angular distance of approximately 45 degrees from the first, open, position to the third position, the valve member 310 goes from being aligned substantially parallel to the fluid flow path to being obliquely angled relative to the fluid flow path and hence the flow of the first aircraft fuel from the first inlet port 304 to the outlet port 306 will be partially restricted by the valve member 310.

Notably, whilst the first aircraft fuel is still able to flow from the first inlet port 304 to the outlet port 306, the volume of the first aircraft fuel flowing along the fluid flow path will be reduced when compared to the volume of the first aircraft fuel flowing along the fluid flow path when the valve member 310 is in the first, fully open, position.

As such, by adjusting the position of the valve member 310, the fuel delivery system 10 of the present invention enables the aircraft operator to control the amount of the first aircraft fuel being delivered into the internal valve chamber 308, and hence enables the chemistry of the fuel mixture being delivered to the aircraft engine(s) 4 to be further tailored as may be desired by the aircraft operator during the aircraft's flight.

It shall be appreciated that whilst the butterfly shut-off valve 300 illustrated in Figure 6 is generally less controllable when compared to the ball shut-off valves 100 and 200 depicted in Figures 4 and 5 (since the shut-off valve 300 is only able to actively tailor the quantity of the first aircraft fuel present within the fuel mixture), the aforementioned shut-off valve 300 provides a simpler, more cost-effective solution which may be preferred in some applications in which precise control of the amount of the second aircraft fuel (or first additive) is not required.

It shall also be appreciated that in some embodiments, the shut-off valve 300 may further comprise a valve nozzle 326 for delivering the second aircraft fuel (or the first additive) from the second inlet port 324 into the internal valve chamber 308.

In some embodiments, such as the embodiment illustrated in Figure 6D, the valve nozzle 326 may be positioned proximate to a rotational axis of the valve member 310.

It shall be appreciated that positioning the valve nozzle 326 proximate to the rotational axis of the valve member 310 enables the second aircraft fuel (or the first additive) to be introduced into a central location within the internal valve chamber 308 rather than at the periphery and thereby helps to encourage mixing of the first aircraft fuel with the second aircraft fuel (or the first additive) upon introduction of the second aircraft fuel (or the first additive) into the internal valve chamber 308.

As shown in Figure 6D, it shall be appreciated that when the valve member 310 is moved into the third position, a low-pressure region 330 is created within the internal valve chamber 308 immediately downstream of the valve member 310. Such low-pressure regions 330 tend to feature high levels of turbulent flow and often contain eddy currents which can assist with fluid mixing. As such, introducing the second aircraft fuel (or the first additive) into the internal valve chamber 308 at such low-pressure regions 330 helps to encourage mixing of the first aircraft fuel with the second aircraft fuel (or the first additive) upon introduction of the second aircraft fuel (or the first additive) into the internal valve chamber 308.

It shall also be appreciated that the suction force generated by said low-pressure region 330 may also be used to draw the second aircraft fuel (or first additive) from the second tank 16 into the internal valve chamber 308 without requiring the use of a dedicated pump thereby making the fuel delivery system 10 less complex.

However, in other embodiments, such as the embodiment illustrated in Figure 6E, the valve nozzle 326 may instead be positioned at an outer peripheral edge of the valve member 310.

It shall be appreciated that when the valve member 310 is moved into the third position, a high-velocity flow region 332 is also created at the peripheral regions of the internal valve chamber 308 between the valve housing 302 and the outer peripheral edges of the valve member 310 which provides a strong suction force.

As such, introducing the second aircraft fuel (or the first additive) into the internal valve chamber 308 at such high-velocity flow regions 332 helps to entrain the second aircraft fuel (or the first additive) into the first aircraft fuel upon introduction of the second aircraft fuel (or the first additive) into the internal valve chamber 308.

It shall also be appreciated that the suction force generated by said high-velocity flow regions 332 may also be used to draw the second aircraft fuel (or first additive) from the second tank 16 into the internal valve chamber 308 without requiring the use of a dedicated pump thereby making the fuel delivery system 10 less complex.

Referring now to Figure 7A, a fuel delivery system 10 according to an alternative embodiment of the present invention shall now be described.

It shall be appreciated that the fuel delivery system 10 depicted in Figure 7A has many features in common with the fuel delivery system 10 depicted in Figure 2 and so, for the sake of conciseness, only the differences shall be described herein. Like components have been denoted by corresponding reference numerals.

Notably, the fuel delivery system 10 illustrated in Figure 7A also comprises a third tank 20 and a third line 22 in fluid communication with the third tank 20.

The third tank 20 is configured for containing and storing a second additive, which is different to the first additive.

In some embodiments, the second additive may be a liquid that has a different chemical structure to that of the first aircraft fuel stored in the first tank 12, and to that of the second aircraft fuel (or first additive) stored in the second tank 16. For example, the second additive may be a citronella additive for combining with the sustainable aviation fuel (SAF) and the "Jet A1" aircraft fuel contained within the first 12 and second 16 tanks.

Alternatively, the second additive may be a biocide, a metal deactivator, a lubricity enhancer, a detergent, a solvent, an emission control additive, an anti-static additive, or any other suitable fuel additive composition.

It shall be appreciated that the second additive may be provided as a liquid, a suspended powder in liquid, a solvent, a surfactant, a gaseous mixture, a dissolved mixture in an aviation fuel or any combination of the above.

It shall also be appreciated that storing the second fuel additive in a separate tank reduces the risk of the contents "going off" or settling in the main fuel tank, thereby achieving improved storage stability.

In the embodiment illustrated in Figure 7A, the third tank 20 is provided as a single tank within the fuselage 2 structure of the aircraft 1. However, it shall be appreciated that in other embodiments, the third tank 20 may be made up of a plurality of sub-tanks and/or may be provided at other locations about the aircraft 1.

The second additive is loaded into the third tank 20 before the aircraft 1 takes off. The aircraft fuel delivery system 10 subsequently delivers the second additive into the internal valve chamber 408 of the shut-off valve 400 via the third line 22 so as to "dose" the first aircraft fuel and/or the fuel mixture with the second additive to create, or enhance the existing, fuel mixture which is then subsequently delivered to the engine(s) 4 via the delivery line 15.

It shall be appreciated that the third line 22 may be any suitable conduit that is configured to transport the second additive contained in the third tank 20.

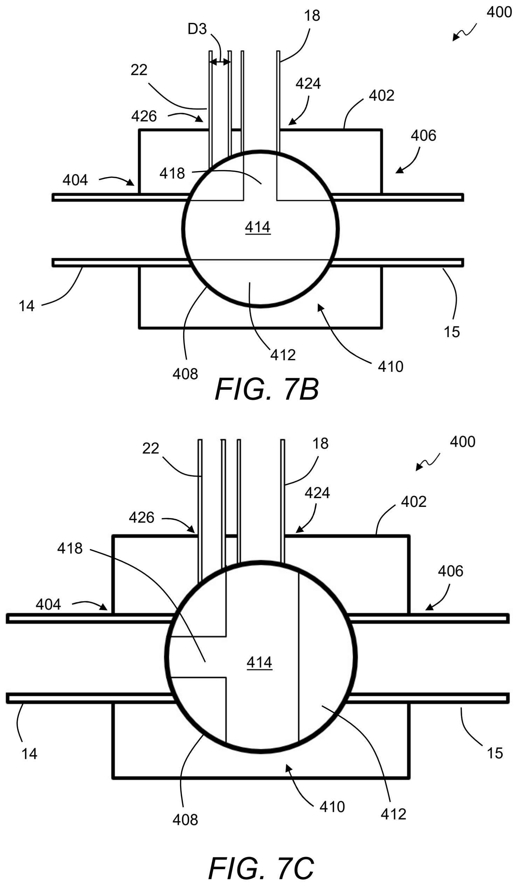

Figures 7B to 7E provide a more detailed depiction one of the shut-off valves 400 of the fuel delivery system 10 illustrated in Figure 7A.

It shall be appreciated that the shut-off valve 400 depicted in Figures 7B to 7E has many features in common with the shut-off valve 100 depicted in Figures 3 and 4 and so, for the sake of conciseness, only the differences shall be described herein. Like components have been denoted by corresponding reference numerals with the prefix "4" .

As shown in Figure 7B, the valve housing 402 further comprises a third inlet port 426 which is in fluid communication with the third line 22 of the fuel delivery system 10 such that the second additive from the third tank 20 can be delivered through the third line 22 and into the internal valve chamber 408.

In the illustrated embodiment, the third inlet port 426 is spaced apart from the first inlet port 404 by an angular distance of approximately 90 degrees such that the third inlet port 426 is positioned adjacent to the second inlet port 424.

As such, when the valve member 410 is in the first, open, position, the third inlet port 426 is not able to align with the second channel 418 provided in the valve member 410 and hence the passage of the second additive from the third inlet port 426 into the internal valve chamber 408 is substantially restricted (or "blocked") by the valve member body 412.

As such, when the valve member 410 is in the third position, the second additive is not able to flow into the first channel 414 and hence only a mixture of the first aircraft fuel and the second aircraft fuel (or the first additive) is delivered to the engine(s) 4.

However, it shall be appreciated that in other embodiments, the third inlet port 426 may be provided at different locations about the valve housing 402. For example, in some embodiments, the third inlet port 426 may be provided opposite to the second inlet port 424.

In the embodiment illustrated in Figure 7B, the third line 22 has a third diameter D3 which is different to the first (D1) and second (D2) diameters of the first 14 and second 18 lines.

As mentioned previously within this application, it shall be appreciated that the respective diameters D1, D2 and D3 of the first 14, second 18 and third 22 lines may be tailored to achieve a desired fuel-to-additive or fuel-to-fuel ratio.

Notably, as shown in Figure 7B, the diameter D3 of the third line 22 is significantly smaller than the corresponding diameters D1 and D2 of the first 14 and second 18 lines meaning that the fuel mixture created within the internal valve chamber 408 will contain greater proportions of the first aircraft fuel and the second aircraft fuel (or first additive) when compared to the second additive.

However, it shall be appreciated that in other embodiments, the first 14, second 18 and third 22 lines may have other diameters. For example, in some embodiments, the diameters D2, D3 of the second 18 and/or third 22 lines may be approximately equal to the corresponding diameter D1 of the first line 14 in embodiments where it is desirable for the fuel mixture created within the internal valve chamber 408 to have a 1:1:1 ratio.

In other alternatives, the diameter D3 of the third 22 line may be greater than the corresponding diameters D1, D2 of the first 14 and second 18 lines in embodiments where it is desirable for the fuel mixture created within the internal valve chamber 408 to contain a greater proportion of the second additive when compared to the first and second aircraft fuels (or the first additive).

Referring now to Figure 7C, when the valve member 410 is rotated by 90 degrees in the anti-clockwise direction into the second, closed, position, the second channel 418 remains unaligned with the third inlet port 426 and hence the second additive is still not able pass from the third inlet port 426 to the outlet port 406 when the valve member 410 is rotated into the second, closed, position.

As such, when the valve member 410 is rotated into the second, closed, position, the flow of the second additive from the third inlet port 426 to the outlet port 406 remains substantially restricted.

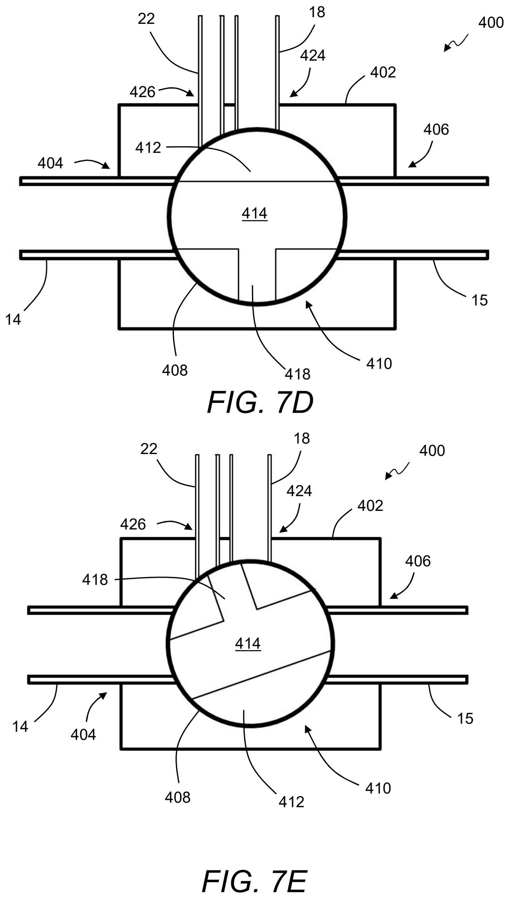

Referring now to Figure 7D, the valve actuator (not shown) is also operable to move the valve member 410 into a third position in which the first aircraft fuel is able to freely flow along the fluid flow path, in which the second aircraft fuel (or the first additive) is not able pass from the second inlet port 424 into the internal valve chamber 408, and in which the second additive is not able to pass from the third inlet port 426 into the internal valve chamber 408.

As shown in Figure 7D, when the valve member 410 is rotated by 180 degrees from the first, open, position into the third position, the first channel 414 of the valve member 410 remains aligned with the first inlet port 404 and the outlet port 406 of the valve housing 402 which enables the first aircraft fuel to travel along the fluid flow path.

As such, when the valve member 410 is in the third position, the first aircraft fuel is still able to freely pass from the first inlet port 404 to the outlet port 406 where it can be subsequently delivered to the engine(s) 4 via the delivery line 15.

However, when the valve member 410 is in the third position, the second channel 418 is no longer aligned with the second inlet port 424 and hence the passage of the second aircraft fuel (or the first additive) into the internal valve chamber 408 is blocked by the valve member body 412.

Similarly, when the valve member 410 is in the third position, the second channel 418 also remains unaligned with the third inlet port 426 and hence the passage of the second additive into the internal valve chamber 408 is also blocked by the valve member body 412.

As such, when the valve member 410 is in the third position, neither the second aircraft fuel (or the first additive) or the second additive are able to flow into the first channel 414 and hence only the first aircraft fuel is delivered to the engine(s) 4.

It shall be appreciated that by actuating the valve member 410 between the first, open, position and the third position, the chemistry of the fuel being delivered to the aircraft engine(s) 4 can be tailored on-board the aircraft 1 as may be desired by the aircraft operator depending on various factors such as the flight route of the aircraft (to account for environmental changes and conditions) and/or the age of the aircraft (for maintenance purposes).

For example, in some instances, the aircraft operator may wish to use a mixture of the first aircraft fuel and a sustainable aviation fuel (or an emission control additive) to help improve local air quality during certain portions of the flight route.

However, during other portions of the flight route, the aircraft operator may instead wish to optimise performance of the aircraft 1 by delivering only the first aircraft fuel (e.g., Jet A1) to the aircraft engine(s) 4.

It shall be appreciated that the fuel delivery system 10 of the present invention allows the aircraft operator to actively tailor the fuel composition being fed to the aircraft engine(s) 4 during the aircraft's flight.

Furthermore, since the aforementioned fuel "dosing" is performed within the shut-off valve 400, the previously mentioned benefits can also be achieved without having to incorporate additional fuel-blending equipment into the fuel delivery system 10 of the aircraft 1. As such, the weight and/or cost of the aircraft 1 remains unaffected.

Referring now to Figure 7E, the valve actuator (not shown) is also operable to move the valve member 410 into a fourth position in which the flow of the first aircraft fuel, the second aircraft fuel (or the first additive) and the second additive from the first 404, second 424 and third 426 inlet ports respectively into the internal valve chamber 408 is permitted.

As shown in Figure 7E, when the valve member 410 is rotated by an angular distance of between 1 and 89 degrees (for example by approximately 45 degrees) in the anti-clockwise direction from the first, open, position to the fourth position, the first channel 414 of the valve member 410 remains partially aligned with the first inlet port 404 and the outlet port 406 of the valve housing 402 and hence the first aircraft fuel is able to flow from the first inlet port 404 to the outlet port 406.

Similarly, when the valve member 410 is rotated into the fourth position, the second channel 418 of the valve member 110 also becomes partially aligned with both the second inlet port 424 and the third inlet port 426 and hence the second aircraft fuel (or the first additive) and the second additive are each able to flow into the second channel 418 (via the second 424 and third 426 inlet ports) and into the first channel 414 where they can be combined with the first aircraft fuel to create a fuel mixture.

However, it shall be appreciated that when the valve member 410 is placed in the fourth position, the flow of the first aircraft fuel, the second aircraft fuel (or the first additive) and the second additive from the first 404, second 424 and third 426 inlet ports into the internal valve chamber 408 will be partially restricted by the valve member body 412.

As set out above, it shall be appreciated that by adjusting the position of the valve member 410, the fuel delivery system 10 of the present invention enables the aircraft operator to introduce a further (second) additive into the internal valve chamber 408, and hence enables the chemistry of the fuel mixture being delivered to the aircraft engine(s) 4 to be further tailored as may be desired by the aircraft operator during the aircraft's flight.

For example, by rotating the valve member 410 into the fourth position, the aircraft operator is able to combine the first aircraft fuel, the second aircraft fuel (or first additive) and the second additive to achieve a custom fuel mixture ratio as may be desired by the aircraft operator depending on various factors such as the flight route of the aircraft (to account for environmental changes and conditions) and/or the age of the aircraft (for maintenance purposes).

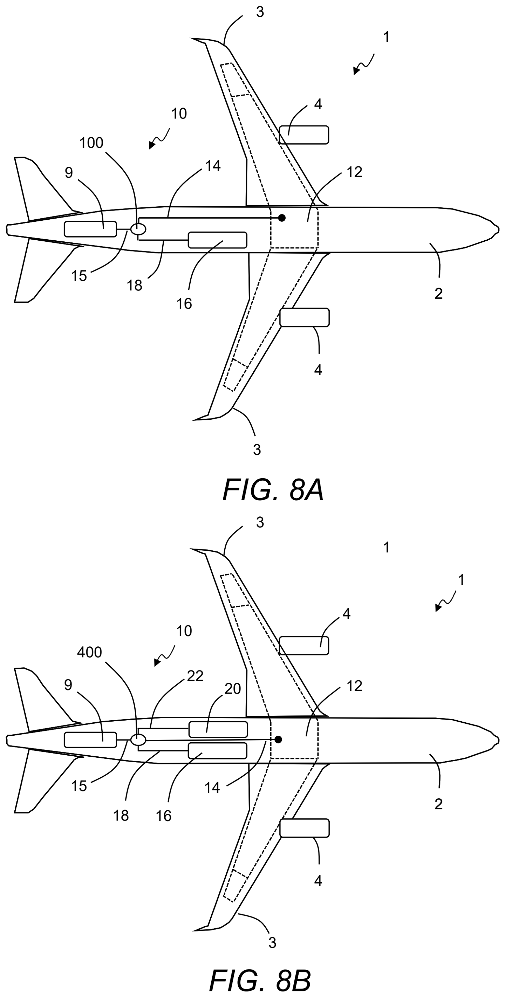

Referring now to Figure 8A, a fuel delivery system 10 according to an further alternative embodiment of the present invention shall now be described.

It shall be appreciated that the fuel delivery system 10 depicted in Figure 8A has many features in common with the fuel delivery system depicted in Figure 2 and so, for the sake of conciseness, only the differences shall be described herein. Like components have been denoted by corresponding reference numerals.

Notably, the fuel delivery system 10 depicted in Figure 8A is configured to deliver the first aircraft fuel, or the fuel mixture, to the aircraft auxiliary power unit 9 rather than the engines 4.

As such, in the embodiment illustrated in Figure 8A, the fuel delivery system 10 comprises a single shut-off valve 100 and the corresponding delivery line 15 extends from the outlet port 106 of said valve 100 to a corresponding inlet (not shown) of the auxiliary power unit 9.

Referring finally to Figure 8B, a fuel delivery system 10 according to yet a further alternative embodiment of the present invention shall now be described.

It shall be appreciated that the fuel delivery system 10 depicted in Figure 8B has many features in common with the fuel delivery system 10 depicted in Figure 7A and so, for the sake of conciseness, only the differences shall be described herein. Like components have been denoted by corresponding reference numerals.

Notably, as with the fuel delivery system 10 depicted in Figure 8A, the fuel delivery system 10 depicted in Figure 8B is also configured to deliver the first aircraft fuel, or a fuel mixture, to the aircraft auxiliary power unit 9 rather than the engines 4.

As such, in the embodiment illustrated in Figure 8B, the fuel delivery system 10 again comprises a single shut-off valve 400 and the corresponding delivery line 15 extends from the outlet port 406 of said shut-off valve 400 to a corresponding inlet (not shown) of the auxiliary power unit 9.

Where the word 'or' appears, this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. An aircraft fuel delivery system comprising:
a first tank for storing a first fluid;
a second tank for storing a second fluid;
a first line in fluid communication with the first tank;
a second line in fluid communication with the second tank; and
a shut-off valve comprising:
a valve housing having an internal valve chamber;
a first inlet port in fluid communication with the first line for introducing the first fluid into the internal valve chamber;
a second inlet port in fluid communication with the second line for introducing the second fluid into the internal valve chamber such that the second fluid can be combined with the first fluid to create a fluid mixture;
an outlet port in fluid communication with a delivery line for conveying the first fluid or the fluid mixture from the internal valve chamber to an aircraft power plant; and
a valve member for controlling the delivery of the first fluid and/or the fluid mixture to the outlet port.

2. The aircraft fuel delivery system according to claim 1, wherein the valve member is further configured to control the amount of the first and/or second fluid being introduced into the internal valve chamber.

3. The aircraft fuel delivery system according to claims 1 or 2, wherein the valve member is configured to move between a first position in which the flow of fluid from the first inlet port to the outlet port is permitted, and a second position in which the flow of fluid from the first inlet port to the outlet port is substantially restricted, and optionally wherein the valve member is further moveable into a third position in which the flow of fluid from the first inlet port to the outlet port is partially restricted.

4. The aircraft fuel delivery system according to any preceding claim, wherein the aircraft fuel delivery system further comprises a valve nozzle for introducing the second fluid from the second inlet port into the internal valve chamber, and optionally wherein the valve nozzle is positioned proximate to a rotational axis of the valve member or at an outer peripheral edge of the valve member.

5. The aircraft fuel delivery system according to claim 4, wherein the valve nozzle is configured to introduce the second fluid into a low-pressure region created within the internal valve chamber downstream of the valve member.

6. The aircraft fuel delivery system according to any preceding claim, wherein the shut-off valve is configured such that, when the valve member is moved into the first position, the flow of fluid from the second inlet port to the outlet port is permitted, and
wherein the shut-off valve is further configured such that, when the valve member is moved into the second position, the flow of fluid from the second inlet port to the outlet port is substantially restricted,
optionally wherein the valve member is further moveable into a third position in which the flow of fluid from the first inlet port to the outlet port is permitted, and in which the flow of fluid from the second inlet port into the internal valve chamber is substantially restricted, and
further optionally wherein the valve member is further moveable into a fourth position in which the flow of fluid from the first inlet port into the internal valve chamber is partially restricted, and in which the flow of fluid from the second inlet port into the internal valve chamber is also partially restricted.

7. The aircraft fuel delivery system according to any preceding claim, wherein the valve member comprises a channel extending through the valve member, and wherein the shut-off valve is configured such that the second fluid is combined with the first fluid within said channel.

8. The aircraft fuel delivery system according to any preceding claim, wherein the aircraft fuel delivery system further comprises:
a third tank for storing a third fluid; and
a third line in fluid communication with the third tank, and
wherein the shut-off valve further comprises a third inlet port in fluid communication with the third line for introducing the third fluid into the internal valve chamber.

9. The aircraft fuel delivery system according to claim 8, wherein the shut-off valve is configured such that, when the valve member is in the first position, the flow of fluid from the third inlet port into the internal valve chamber is substantially restricted.

10. The aircraft fuel delivery system according to claims 8 or 9, wherein the shut-off valve is configured such that, when the valve member is in the second position, the flow of fluid from the third inlet port to the outlet port is substantially restricted.

11. The aircraft fuel delivery system according to claims 8, 9 or 10, wherein the valve member is further moveable into a third position in which the flow of fluid from the first inlet port to the outlet port is permitted, and in which the flow of fluid from the second and third inlet ports into the internal valve chamber is substantially restricted.

12. The aircraft fuel delivery system according to any of claims 8 to 11, wherein the valve member is further moveable into a fourth position in which the flow of fluid from the first, second and third inlet ports into the internal valve chamber is permitted.

13. The aircraft fuel delivery system according to any preceding claim, wherein the shut-off valve comprises a venturi element, and wherein said venturi element is incorporated into the valve member.

14. An aircraft comprising the aircraft fuel delivery system according to any preceding claim.

15. A method of delivering a fluid mixture to an aircraft power plant, said method comprising the steps of:
providing a first tank containing a first fluid;
providing a second tank containing a second fluid;
providing a shut-off valve having an internal valve chamber;
introducing the first fluid and the second fluid into the internal valve chamber;
mixing the second fluid with the first fluid within the internal valve chamber to create a fluid mixture; and
delivering the fluid mixture from the internal valve chamber to the aircraft power plant.
